# FASCICULE DE BREVET EUROPEEN

(11) **EP 1 341 013 B1**
(45) Date de publication et mention de la délivrance du brevet: **30.05.2007**
(21) Numéro de dépôt: 03100475.7
(22) Date de dépôt: 27.02.2003
(51) Int. Cl.: G02B 6/36

(54) **Joint optique tournant**
Optische Drehverbindung
Optical rotary joint

(30) Priorité: 01.03.2002 FR 0202617
(43) Date de publication de la demande: 03.09.2003
(73) Titulaire: AIR PRECISION S.A., F-92353 Le Plessis-Robinson Cédex (FR)
(72) Inventeur: MERCEY, Thibault, 91120 Palaiseau (FR); SABATER, Jacques, 91190 Gir sur Yvette (FR)
(74) Mandataire: Poulin, Gérard

(56) Documents cités:
- EP-A- 0 218 739
- US-A- 4 525 025
- US-A- 4 753 506
- US-A- 5 157 745
- US-A- 5 371 814
- US-A- 5 991 478

## Description

### Domaine technique

L'invention concerne un joint optique tournant destiné à transmettre des informations sous forme optique entre deux organes aptes à tourner l'un par rapport à l'autre autour d'un axe commun.

De façon plus précise, l'invention concerne un joint optique tournant conçu pour assurer la transmission des informations de façon décalée par rapport à l'axe commun auxdits organes.

De tels joints peuvent être utilisés dans des domaines techniques nombreux et variés tels que les tourelles de radar ou de char, les rotors d'hélicoptères, etc..

### Etat de la technique

Pour assurer la transmission des informations entre deux organes appelés à tourner l'un par rapport à l'autre, une solution classique consiste à utiliser des joints électriques tournants.

Dans les joints de ce type, la transmission des signaux électriques est assurée par des pièces mécaniques qui frottent l'une contre l'autre.

Les joints électriques tournants présentent toutefois des inconvénients importants. Parmi ces inconvénients, on citera notamment l'usure des pièces due aux contacts mécaniques, qui nécessite un entretien régulier, l'apparition de parasites engendrés par les frottements des pièces en contact et le caractère limité de la bande passante d'un tel joint (de l'ordre de quelques dizaines à quelques centaines de mégahertz).

Les joints optiques tournants permettent de résoudre ces différents problèmes. En effet, ils assurent la transmission de signaux optiques sans contact, ils sont très peu sensibles aux parasites et ils autorisent un débit beaucoup plus élevé que les joints électriques tournants.

La plupart des joints optiques tournants assurent la transmission des signaux selon l'axe commun aux deux organes appelés à tourner l'un par rapport à l'autre. Ils sont alors appelés joints "on-line". Dans ce cas, deux fibres optiques ou autres conduits de lumière sont placés en regard l'un de l'autre sur l'axe de rotation commun.

Ces joints optiques tournants ont pour principal inconvénient de ne ménager en général qu'une seule voie de transmission ou un seul canal optique.

De plus, ils imposent que la transmission des informations s'effectue selon l'axe de rotation commun, ce qui n'est pas satisfaisant dans certaines applications particulières.

Dans l'article de N.Lewis et al. "A four channel bidirectional data link using wavelength division multiplexing", paru dans la revue "Proceeding of the SPIE" publiée par "The International Society for Optical Engineering", vol.574, 1985, pages 47 à 54, il a été proposé de supprimer le premier inconvénient en utilisant des systèmes de multiplexage. Dans ce cas, plusieurs voies de transmission ou canaux optiques cheminent simultanément selon l'axe du joint.

L'inconvénient majeur de cette solution est que le multiplexage nécessite de l'électronique et donc un apport d'énergie. De plus, la transmission des informations s'effectue toujours selon l'axe de rotation.

Ces dernières années, différentes solutions ont été proposées pour transmettre les informations de manière décalée par rapport à l'axe d'un joint optique tournant. Les joints de ce type, fréquemment appelés joints "off-axis", permettent de laisser libre l'axe du système, tout en transmettant les informations sur la couronne du joint. De plus, ces joints sont par nature multi-canaux. Ils autorisent donc plusieurs voies de transmission, lorsque cela est nécessaire.

Un premier type de joints "off-axis" est décrit dans les documents US-A-4 525 025 et US-A-5 991 478. Un rotor est placé coaxialement à l'intérieur d'un stator. Un ou plusieurs prismes ou fibres optiques montés dans le stator émettent de la lumière sensiblement tangentiellement vers la paroi intérieure cylindrique réfléchissante du stator. La lumière réfléchie sur cette surface est captée par un ou plusieurs prismes ou fibres récepteurs montés dans le rotor. L'utilisation de prismes ou de fibres orientés dans des directions contraires permet de rendre le système bidirectionnel.

Ce type de joint présente différents inconvénients. Ainsi, dans le cas où des fibres optiques sont utilisées, le système de réception est pratiquement en contact avec la paroi intérieure réfléchissante. Celle-ci risque donc d'être endommagée en cas de choc. De plus, le débit de transmission est limité à 50 Mbit/s pour des joints de diamètre compris entre environ 25 et 30 cm.

Les joints optiques dans lesquels la transmission des signaux lumineux s'effectue au moyen de prismes, conformément au document US-A-5 991 478, ont aussi pour inconvénient d'être coûteux, en raison du nombre de composants qu'ils contiennent. De plus, le signal de sortie n'est pas un signal optique, mais un signal électrique. Enfin, le récepteur nécessite un apport d'énergie pour être polarisé.

Le document US-A-4 753 506 propose un joint optique tournant de type "off-axis", dans lequel deux pièces cylindriques tournent l'une par rapport à l'autre selon un axe commun.

Selon une première configuration, l'une des pièces porte un émetteur et une pluralité de prismes répartis circonférentiellement de façon à recevoir à tour de rôle le faisceau lumineux en provenance de l'émetteur. L'autre pièce porte un récepteur en vis-à-vis des prismes. Chacun des prismes dirige un faisceau lumineux conique à base ellipsoïdale vers l'autre pièce, de façon à assurer une couverture totale de la zone dans laquelle se déplace le récepteur.

Selon une autre configuration, l'une des pièces porte un émetteur unique et l'autre pièce porte une pluralité de récepteurs. Dans ce cas, l'émetteur dirige directement un faisceau lumineux conique à base ellipsoïdale vers les récepteurs.

Cet agencement connu a pour inconvénients que le signal de sortie est électrique et que la puissance doit être élevée.

Enfin, on connaît aussi de l'article "Proof of concept models of a multichannel off-axis passive bidirectional fiber optic rotary joint", de Koch WW et al., paru dans la revue "Proceedings of the SPIE", "The International Society for Optical Engineering", volume 931, 1988, pages 94 à 97, un joint optique tournant de type "off-axis". Dans ce joint, un élément optique intermédiaire intégrant un faisceau de fibres optiques est interposé axialement entre un rotor et un stator. Ces derniers sont équipés l'un et l'autre de fibres optiques associées à des lentilles de collimation tournées vers cet élément intermédiaire et régulièrement réparties autour de l'axe commun au rotor et au stator. Un mécanisme fait tourner l'élément intermédiaire dans le même sens que le rotor, à une vitesse angulaire égale à la moitié de la vitesse du rotor.

Les documents US-A-5 157 745 et US-A-5 371 814 proposent des agencements comparables, dans lesquels le faisceau de fibres de l'élément intermédiaire est remplacé par un prisme de Dove.

Ce type de joint optique tournant à élément intermédiaire présente l'inconvénient majeur de nécessiter des réglages très importants, dont la mise en oeuvre est particulièrement délicate et pénalisante.

### Exposé de l'invention

L'invention a précisément pour objet un joint optique tournant de type "off-axis", de préférence bidirectionnel, ne présentant pas les inconvénients des joints de ce type de l'art antérieur et permettant notamment la transmission de signaux optiques à fort débit (2,5 Gbit/s) de façon relativement simple et peu coûteuse et en laissant libre, si nécessaire, la région dans laquelle se trouve l'axe du joint.

Conformément à l'invention, cet objectif est atteint au moyen d'un joint optique tournant, comprenant un premier organe et un deuxième organe aptes à tourner l'un par rapport à l'autre autour d'un axe commun et au moins une voie de transmission d'un signal optique entre lesdits organes, chaque voie de transmission comprenant des premiers moyens de collimation de la lumière issue d'une première fibre optique, portés par le premier organe et adaptés à produire des faisceaux de rayons sensiblement parallèles à l'axe commun et décalés par rapport à cet axe, et des deuxièmes moyens de collimation aptes à focaliser dans une deuxième fibre optique la lumière collimatée provenant du premier organe et portés par le deuxième organe, lesdits premiers et deuxièmes moyens de collimation étant placés sensiblement à une même distance dudit axe commun, caractérisé en ce que les premiers et les deuxièmes moyens de collimation sont situés directement en vis-à-vis l'un de l'autre, leur nombre et leur agencement étant tels qu'ils assurent en permanence une variation de la puissance du signal optique transmis inférieure à 25%, lors d'une quelconque rotation relative desdits organes quand chacune des voies de transmission transmettent une portion égale du signal optique.

L'agencement particulièrement simple défini ci-dessus autorise une transmission bidirectionnelle de signaux optiques en laissant totalement libre la partie centrale du joint, lorsque cela est nécessaire. Ainsi, le premier et le deuxième organes peuvent aisément être évidés selon ledit axe commun, lorsque l'application le nécessite.

De surcroît, il est possible de transmettre les signaux optiques avec un débit élevé, de l'ordre de 2,5 Gbit/s, ce qui permet d'utiliser ce type de joint dans les applications les plus exigeantes.

Chacun des deux organes d'un joint optique tournant comprend un certain nombre de moyens de collimation et un certain nombre de coupleurs optiques à fibres. Les moyens de collimation ont pour fonction de transformer le faisceau divergent en un faisceau collimaté, selon le sens de propagation de la lumière. Les coupleurs optiques à fibres servent quant à eux à diviser, puis à regrouper les faisceaux.

Dans les modes de réalisation préférés de l'invention, le nombre total des premiers et deuxièmes moyens de collimation est inférieur ou égal à huit. Ce nombre réduit permet de limiter le nombre de coupleurs optiques à fibres utilisés dans chacun des deux organes pour diviser ou regrouper les faisceaux issus des différents moyens de collimation d'un même organe, à l'origine de l'essentiel des pertes intrinsèques du système.

Dans un mode de réalisation encore préféré de l'invention, le nombre des moyens de collimation sur chaque organe est pair et ce nombre est respectivement égal à deux pour les premiers moyens de collimation et à quatre pour les deuxièmes moyens de collimation. Cet agencement est particulièrement avantageux car il permet de n'utiliser que des coupleurs existants à une entrée et deux sorties et inversement.

Dans ce cas, les quatre premiers moyens de collimation sont de préférence régulièrement espacés autour dudit axe commun et les deux deuxièmes moyens de collimation sont agencés de telle sorte que lorsque l'un d'entre eux est aligné avec l'un des premiers moyens de collimation, l'autre est situé sensiblement tangentiellement entre deux autres premiers moyens de collimation.

Selon un autre mode de réalisation de l'invention, le nombre des premiers et deuxièmes moyens de collimation est respectivement égal à quatre et à trois. Par rapport au mode de réalisation précédent, cet agencement est plus favorable car il permet de réduire le phénomène de variation de la puissance lors de la rotation d'un organe (on parle alors de phénomène de modulation du signal transmis). Toutefois, il fait appel à des technologies de coupleurs optiques à fibres plus complexes.

Avantageusement, chacun des premiers et des deuxièmes moyens de collimation a sensiblement une même section.

Selon un autre aspect de l'invention, la voie de transmission comprend, à l'intérieur de chacun des premier et deuxième organes, des fibres optiques émettrices et réceptrices reliées à chacun des premiers et deuxièmes moyens de collimation par des moyens de couplage optique permettant de séparer/recombiner des faisceaux.

Dans les modes de réalisation préférés de l'invention, les fibres optiques sont des fibres multimodes.

### Brève description des dessins

On décrira à présent un mode de réalisation préféré de l'invention, en se référant aux dessins annexés, dans lesquels :
- la figure 1 est une vue de côté, en coupe, qui représente un joint optique tournant réalisé conformément à l'invention ;
- la figure 2 est une section qui illustre schématiquement l'implantation des moyens de collimation dans le joint optique de la figure 1 ;
- la figure 3 est un schéma de principe du joint optique des figures 1 et 2, qui montre notamment les coupleurs optiques à fibres et le cheminement des signaux lumineux ; et
- la figure 4 représente l'évolution de la modulation (en pourcentage) des signaux lumineux à l'intérieur du joint optique selon l'invention, en fonction de la rotation angulaire relative (en degrés) des deux organes qui le constituent, dans le cas d'un joint à deux et quatre moyens de collimation.

### Description détaillée d'un mode de réalisation préféré de l'invention

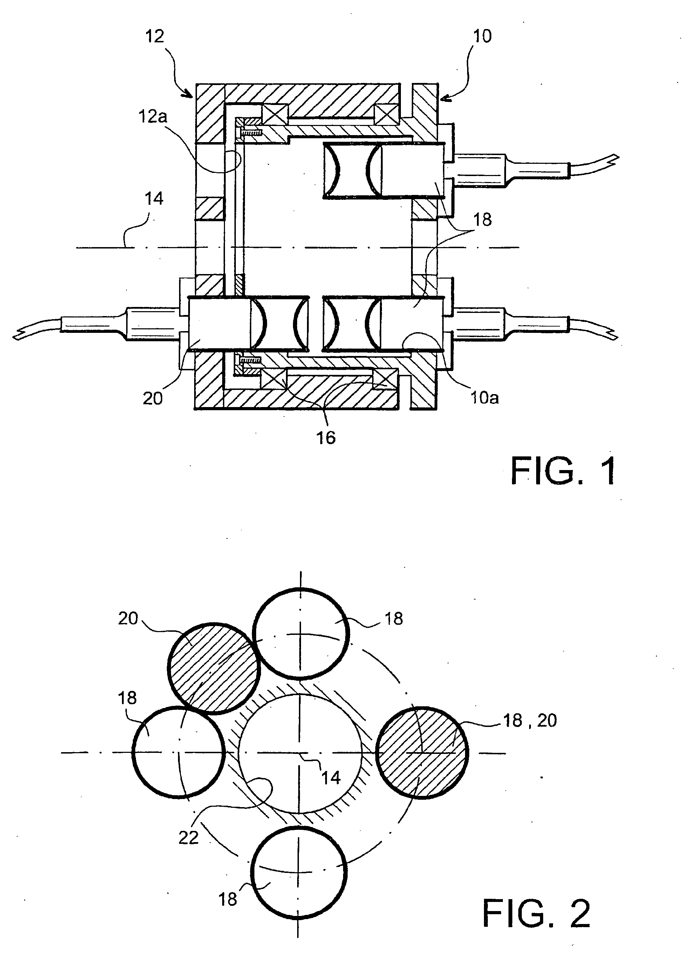

On a représenté sur la figure 1 la partie principale d'un joint optique tournant de type "off-axis" conforme à l'invention. Comme l'illustre cette figure, le joint comprend un premier organe 10 et un deuxième organe 12, présentant un axe commun 14. Les organes 10 et 12 sont aptes à tourner l'un par rapport à l'autre autour de cet axe commun 14. A cet effet, des paliers 16 peuvent notamment être interposés entre ces organes 10 et 12.

Comme l'illustre également la figure 1, le premier organe 10 comprend une face d'extrémité 10a située en vis-à-vis d'une face d'extrémité 12a du deuxième organe 12. Ces faces d'extrémité 10a et 12a sont perpendiculaires à l'axe 14 commun aux deux organes.

Dans le mode de réalisation préféré de l'invention illustré à titre d'exemple sur les figures 1 et 2, le premier organe 10 supporte quatre premiers moyens de collimation 18 et le deuxième organe 12 supporte deux deuxièmes moyens de collimation 20. Plus précisément, les premiers moyens de collimation 18 font saillie sur la face d'extrémité 10a du premier organe 10 et les deuxièmes moyens de collimation 20 font saillie sur la face d'extrémité 12a du deuxième organe 12. Ainsi, les moyens de collimation 18 et 20 sont situés directement en vis-à-vis les uns des autres lors de la rotation relative des organes 10 et 12.

Chacun des moyens de collimation 18 et 20 présente un axe optique orienté parallèlement à l'axe commun 14 et situé à une même distance non nulle de cet axe commun. En d'autres termes, les axes optiques des moyens de collimation 18 et 20 sont tous décalés d'une même distance par rapport à l'axe 14 commun aux organes 10 et 12.

De plus, les axes optiques des premiers moyens de collimation 18 sont régulièrement espacés les uns des autres, ce qui signifie que chacun de ces axes optiques est décalé angulairement de 90° par rapport aux axes optiques des premiers moyens de collimation 18 adjacents.

En outre, comme le montre plus précisément la figure 2, les axes optiques des deuxièmes moyens de collimation 20 sont décalés angulairement de façon telle que, lorsque l'un de ces axes est aligné avec l'axe optique de l'un des premiers moyens de collimation 18, l'axe optique de l'autre deuxième moyen de collimation 20 est situé angulairement à égale distance entre deux autres des premiers moyens de collimation 18. Plus précisément, la distance d entre l'axe commun 14 et chacun des axes optiques des moyens de collimation 18 et 20, ainsi que la section s de ces différents moyens de collimation sont déterminées de façon telle que l'autre deuxième moyen de collimation 20 soit alors sensiblement tangent aux deux autres des premiers moyens de collimation.

A titre d'exemple nullement limitatif de la portée de l'invention, cet agencement peut notamment être obtenu en donnant à la distance d une valeur égale à 21 mm et en utilisant des moyens de collimation de 16 mm de diamètre utile.

Bien entendu, des propriétés comparables pourraient être obtenues en augmentant ou en diminuant simultanément ces deux grandeurs, par exemple afin d'obtenir un passage central 22 de plus grande ou de plus petite taille, respectivement.

Il est à noter que pour une valeur donnée de la distance d, la disposition géométrique définie plus haut constitue une limite inférieure pour la section s. En d'autres termes, la section des moyens de collimation peut être telle que, lorsque l'un des deuxièmes moyens de collimation 20 est aligné avec l'un des premiers moyens de collimation 18, l'autre deuxième moyen de collimation 20 soit situé entre deux autres premiers moyens de collimation 18 et chevauche partiellement ces derniers lorsque le joint est vu en bout.

Les moyens de collimation 18 et 20 sont constitués par tous systèmes optiques aptes à être placés à l'extrémité de fibres optiques pour émettre ou recevoir un faisceau lumineux parallèle. Ces systèmes optiques, bien connus de l'homme du métier, comprennent habituellement une lentille ou des jeux de lentilles qui permettent de transformer un faisceau divergent en un faisceau collimaté. On peut citer à titre d'exemples non limitatifs des lentilles à gradient d'indices de type GRIN et des lentilles asphériques.

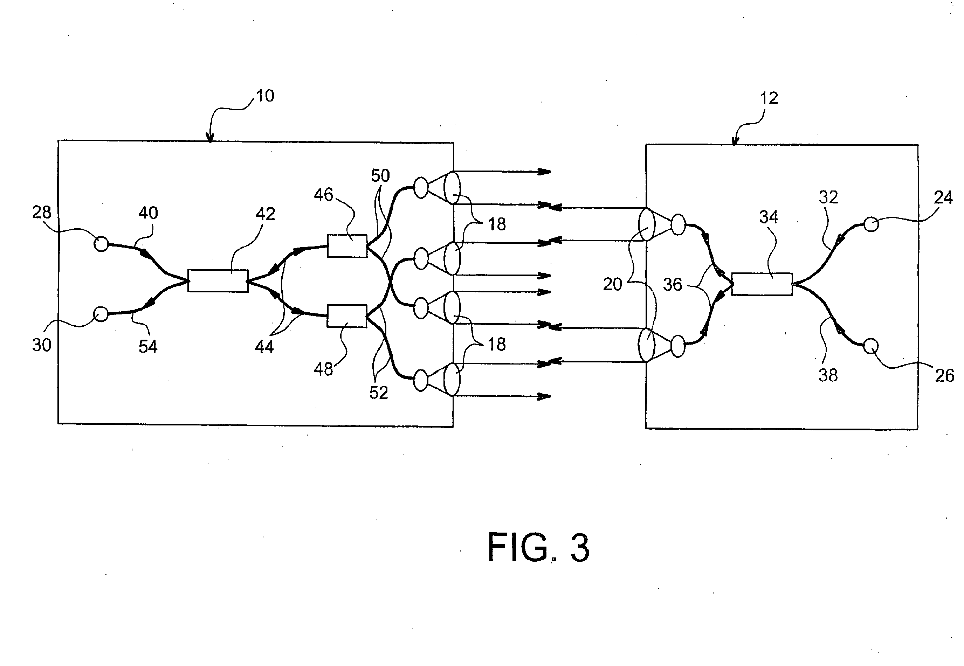

Comme l'illustre plus précisément la figure 3, le joint optique tournant conforme à l'invention comprend de plus un certain nombre de fibres optiques et de coupleurs optiques à fibres portés par chacun des organes 10 et 12.

Ainsi, dans le mode de réalisation représenté qui concerne un joint optique apte à fonctionner de manière bidirectionnelle, le premier organe 10 comprend des fibres optiques et des coupleurs optiques à fibres permettant de relier chacun des premiers moyens de collimation 18 d'une part à une source 24 apte à émettre des signaux lumineux et d'autre part à un récepteur 26 de signaux lumineux. De façon comparable, le deuxième organe 12 comprend des fibres optiques et des coupleurs optiques à fibres permettant de relier chacun des deuxièmes moyens de collimation 20 d'une part à une source 28 apte à émettre des signaux lumineux et d'autre part à un récepteur 30 de signaux lumineux.

Les sources 24 et 28 sont, par exemple, des diodes laser émettant autour de 1325 nm. Les récepteurs dépendent de l'application envisagée.

De façon plus précise, une première fibre optique 32 relie la source 24 à un premier coupleur optique en X 34 à l'intérieur du premier organe 10. De plus, deux fibres optiques 36 relient le premier coupleur en X 34 à chacun des premiers moyens de collimation 18. Enfin, une autre fibre optique 38 relie le premier coupleur en X 34 au récepteur 26.

De manière comparable, dans le deuxième organe 12 une fibre optique 40 relie la source 28 à un deuxième coupleur optique en X 42. Deux fibres optiques 44 relient également le deuxième coupleur optique en X 42 respectivement à un troisième coupleur optique en Y 46 et à un quatrième coupleur optique en Y 48. Deux autres fibres optiques 50 relient le troisième coupleur optique en Y 46 à deux des deuxièmes moyens de collimation 20 et encore deux autres fibres optiques 52 relient le quatrième coupleur optique en Y 48 aux deux autres deuxièmes moyens de collimation 20. Enfin, une dernière fibre optique 54 relie le deuxième coupleur optique en X 42 au récepteur 30 du deuxième organe 12.

Tous les coupleurs du joint optique sont globalement équilibrés, de façon que la puissance d'un signal soit globalement divisée ou multipliée par deux au passage de chacun d'entre eux, aux pertes intrinsèques prés.

L'agencement qui vient d'être décrit permet au coupleur de fonctionner de façon bidirectionnelle.

Ainsi, des signaux optiques émis par la source 24 du premier organe 10 sont acheminés par la fibre 32 jusqu'au coupleur 34, qui divisent les signaux en deux parties acheminées respectivement par les fibres 36 jusqu'à chacun des premiers moyens de collimation 18. Les signaux optiques sortant de ces derniers sont repris par les deuxièmes moyens de collimation 20, avec une modulation qui sera précisée par la suite. Lesdits signaux cheminent alors jusqu'aux coupleurs 46 et 48 au travers des fibres optiques 50 et 52. A la sortie des coupleurs 50 et 52, ils sont acheminés jusqu'au coupleur 42 par les fibres optiques 44, avant d'être transmis au récepteur 30 par la fibre optique 54.

De façon comparable, des signaux optiques émis par la source 28 associée au deuxième organe 12 sont transmis au récepteur 26 du premier organe 10 en suivant un trajet inverse.

Dans le joint optique tournant conforme à l'invention, les différentes fibres optiques sont avantageusement des fibres multimodes, d'ouverture numérique choisie de telle façon qu'elle permet de limiter le phénomène de modulation du signal lors de la rotation d'un organe par rapport à l'autre.

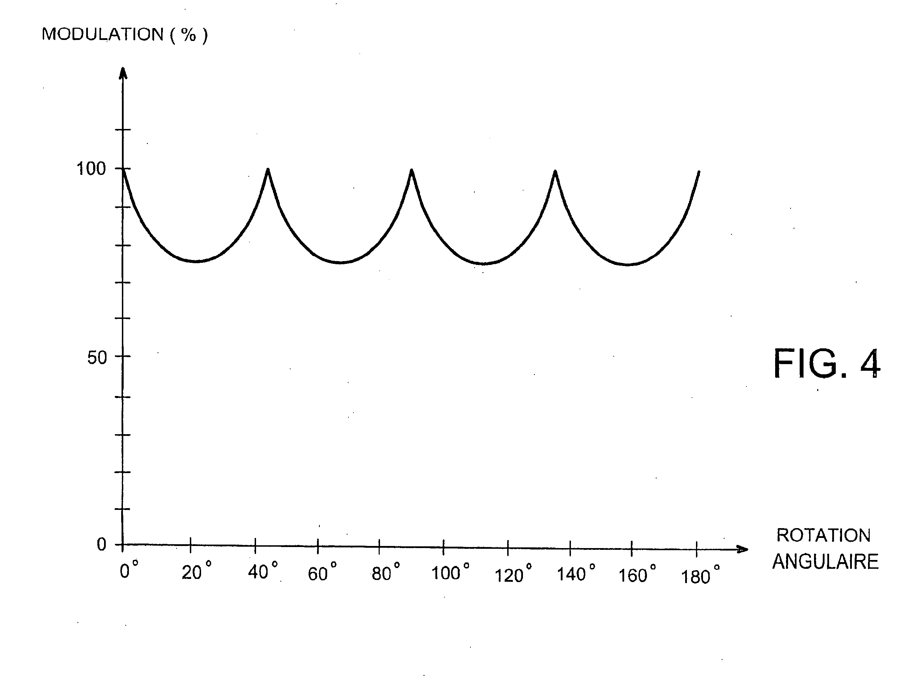

Comme le fait apparaître la courbe de la figure 4, l'agencement des moyens de collimation 18 et 20 conforme à l'invention a pour conséquence une variation cyclique de la modulation du signal transmis (en % de la moitié du signal) en fonction de la rotation angulaire relative entre les organes 10 et 12 (en degrés).

De façon plus précise, dans le cas d'une configuration où la lumière est acheminée à partir d'une fibre optique depuis les deux moyens de collimation 20 vers les quatre moyens de collimation 18 et compte tenu des pertes habituelles des coupleurs à fibres en "X" et en "Y", l'énergie récupérée sur l'organe 10 est au moins égale à 34% de l'énergie injectée dans l'organe 12 et sa variation lors d'une rotation relative des organes 10 et 12 est inférieure à 25% de l'amplitude du signal récupéré.

Dans le cas d'une configuration où la lumière est acheminée à partir d'une fibre optique depuis les quatre moyens de collimation 18 vers les deux moyens de collimation 20, et compte tenu des pertes habituelles des coupleurs à fibres en "X" et en "Y", l'énergie récupérée sur l'organe 12 est au moins égale à 17% de l'énergie injectée dans l'organe 10 et sa variation lors d'une rotation relative des organes 10 et 12 est inférieure à 25% de l'amplitude du signal récupéré.

Il est à noter que les pertes totales sont les mêmes dans les deux sens, du fait du caractère bidirectionnel du joint et du principe de retour inverse de la lumière.

A cette perte due essentiellement à la géométrie du joint optique tournant conforme à l'invention s'ajoutent des pertes optiques inhérentes à la présence d'éléments optiques tels que les moyens de collimation 18 et 20 et les coupleurs 34, 42, 46 et 48. Dans l'agencement décrit précédemment, la perte optique globale du joint (en puissance) est estimée à environ -12 à -15 dB.

Comme le met notamment en lumière la figure 2, le joint optique tournant conforme à l'invention permet de libérer toute la partie centrale du joint à proximité de l'axe commun 14, lorsque cela est nécessaire.

Bien entendu, l'invention n'est pas limitée au mode de réalisation préféré qui vient d'être décrit. Ainsi, des résultats satisfaisants peuvent également être obtenus en utilisant des premiers et des deuxièmes moyens de collimation en vis-à-vis agencés différemment, de telle sorte que leur nombre total reste inférieur ou égal à huit. Un agencement utilisant trois premiers moyens de collimation et quatre deuxièmes moyens de collimation est également satisfaisant de ce point de vue.

## Revendications

1. Joint optique tournant, comprenant un premier organe (10) et un deuxième organe (12) aptes à tourner l'un par rapport à l'autre autour d'un axe commun (14) et au moins une voie de transmission d'un signal optique entre lesdits organes, chaque voie de transmission comprenant des premiers moyens de collimation (18) de la lumière issue d'une première fibre optique, portés par le premier organe (10) et adaptés à produire des faisceaux de rayons sensiblement parallèles à l'axe commun (14) et décalés par rapport à cet axe et des deuxièmes moyens de collimation (20) aptes à focaliser dans une deuxième fibre optique la lumière collimatée provenant du premier organe (10) et portés par le deuxième organe (12), lesdits premiers et deuxièmes moyens de collimation (18, 20) étant placés sensiblement à une même distance dudit axe commun (14), **caractérisé en ce que** les premiers et les deuxièmes moyens de collimation (18, 20) sont situés directement en vis-à-vis l'un de l'autre, leur nombre et leur agencement étant tels qu'ils assurent en permanence une variation de la puissance du signal optique transmis inférieure à 25%, lors d'une quelconque rotation relative desdits organes (10, 12) quand chacune des voies de transmission transmettent une portion égale du signal optique.

2. Joint optique tournant selon la revendication 1, dans lequel le premier et le deuxième organes (10, 12) sont évidés selon ledit axe commun (14).

3. Joint optique tournant selon l'une quelconque des revendications 1 et 2, dans lequel le nombre total des premiers et deuxièmes moyens de collimation (18, 20) est inférieur ou égal à huit.

4. Joint optique tournant selon la revendication 3, dans lequel le nombre des premiers et deuxièmes moyens de collimation (18, 20) est respectivement égal à quatre et à deux.

5. Joint optique tournant selon la revendication 4, dans lequel les quatre premiers moyens de collimation (18) sont régulièrement espacés autour dudit axe commun (14) et les deux deuxièmes moyens de collimation (20) sont agencés de telle sorte que lorsque l'un d'entre eux est aligné avec l'un des premiers moyens de collimation (18), l'autre est situé sensiblement tangentiellement entre deux autres premiers moyens de collimation (18).

6. Joint optique tournant selon la revendication 3, dans lequel le nombre des premiers et deuxièmes moyens de collimation (18,20) est respectivement égal à trois et à quatre.

7. Joint optique tournant selon l'une quelconque des revendications précédentes, dans lequel chacun des premiers et des deuxièmes moyens de collimation (18, 20) a sensiblement une même section.

8. Joint optique tournant selon l'une quelconque des revendications précédentes, dans lequel la voie de transmission comprend, à l'intérieur de chacun des premier et deuxième organes (10, 12), des fibres optiques émettrices et réceptrices (32, 36, 38, 40, 44, 50, 52, 54) reliées à chacun des premiers et deuxièmes moyens de collimation (18, 20) par des moyens de couplage optique (34, 42, 46, 48) permettant de séparer/recombiner des faisceaux.

9. Joint optique tournant selon l'une quelconque des revendications précédentes, dans lequel les fibres optiques (32, 36, 38, 40, 44, 50, 52, 54) sont des fibres multimodes.

## Claims

1. A rotating optical joint, comprising a first organ (10) and a second organ (12), able to rotate independently of one another on a common axis (14) and at least one channel for transmission of an optical signal between the said organs, where each transmission channel contains first collimators (18) of the light emitted from a first optical fibre, mounted on the first organ (10) and adapted to produce light beams approximately parallel to the common axis (14) and offset in relation to this axis, and second collimators (20) able to focus into a second optical fibre the collimated light originating from the first organ (10) and mounted on the second organ (12), which first and second collimators (18, 20) are positioned approximately at an identical distance from the said common axis (14), **characterized in that** the first and second collimators (18, 20) are located directly opposite one another, and where their number and their arrangement are such that their permanent variation of the power of the transmitted optical signal is less than 25%, during a random relative rotation of the said organs (10, 12) when each of the transmission channels transmit an equal portion of the optical signal.

2. A rotating optical joint in claim 1, in which the first and second organs (10, 12) are hollow in the said common axis (14).

3. A rotating optical joint in either of claims 1 and 2, in which the total number of the first and second collimators (18, 20) is less than or equal to eight.

4. A rotating optical joint in claim 3, in which the number of the first and second collimators (18, 20) is respectively equal to four and to two.

5. A rotating optical joint in claim 4, in which the four first collimators (18) are regularly spaced around the said common axis (14) and the two second collimators (20) are arranged such that when one of them is aligned with one of the first collimators (18), the other is located approximately tangentially between two other first collimators (18).

6. A rotating optical joint in claim 3, in which the number of the first and second collimators (18, 20) is respectively equal to three and to four.

7. A rotating optical joint in any of the above claims, in which each of the first and second collimators (18, 20) has approximately the same section.

8. A rotating optical joint in any of the above claims, in which the transmission channel comprises, inside each of the first and second organs (10, 12), emitting and receiving optical fibres (32, 36, 38, 40, 44, 50, 52, 54) linked to each of the first and second collimators (18, 20) by optical couplers (34, 42, 46, 48) enabling beams to be separated/recombined.

9. A rotating optical joint in any of the above claims, in which the optical fibres (32, 36, 38, 40, 44, 50, 52, 54) are multimode fibres.

## Patentansprüche

1. Drehbare optische Verbindung, die ein erstes Organ (10) und ein zweites Organ (12), die sich relativ zueinander um eine gemeinsame Achse (14) drehen können, und wenigstens einen Weg für die Übertragung eines optischen Signals zwischen den Organen umfasst, wobei jeder Übertragungsweg erste Kollimationseinrichtungen (18) für das von einer ersten Lichtleitfaser ausgegebene Licht, die von dem ersten Organ (10) getragen werden und Strahlenbündel erzeugen können, die zu der gemeinsamen Achse (14) im Wesentlichen parallel und in Bezug auf diese Achse versetzt sind, und zweite Kollimationseinrichtungen (18, 20), die das parallelgerichtete Licht, das von dem ersten Organ (10) ausgeht, auf eine zweite Lichtleitfaser fokussieren können und von dem zweiten Organ (12) getragen werden, umfasst, wobei die ersten und die zweiten Kollimationseinrichtungen (18, 20) im Wesentlichen im selben Abstand von der gemeinsamen Achse (14) angeordnet sind, **dadurch gekennzeichnet, dass** sich die ersten und die zweiten Kollimationseinrichtungen (18, 20) direkt einander gegenüber befinden, wobei ihre Anzahl und ihre Anordnung derart sind, dass sie ständig eine Schwankung der Leistung des übertragenen optischen Signals, die kleiner als 25 % ist, gewährleisten, wenn eine beliebige relative Drehung der Organe (10, 12) erfolgt, wenn jeder der Übertragungswege einen gleichen Teil des optischen Signals überträgt.

2. Drehbare optische Verbindung nach Anspruch 1, bei der das erste und das zweite Organ (10, 12) längs der gemeinsamen Achse (14) ausgespart sind.

3. Drehbare optische Verbindung nach einem der Ansprüche 1 und 2, bei der die Gesamtzahl der ersten und der zweiten Kollimationseinrichtungen (18, 20) kleiner oder gleich acht ist.

4. Drehbare optische Verbindung nach Anspruch 3, bei der die Anzahl der ersten und der zweiten Kollimationseinrichtungen (18, 20) vier bzw. zwei ist.

5. Drehbare optische Verbindung nach Anspruch 4, bei der die vier ersten Kollimationseinrichtungen (18) um die gemeinsame Achse (14) regelmäßig beabstandet sind und die zwei zweiten Kollimationseinrichtungen (20) in der Weise angeordnet sind, dass dann, wenn eine von ihnen auf eine der ersten Kollimationseinrichtungen (18) ausgerichtet ist, die andere sich im Wesentlichen tangential zwischen zwei anderen ersten Kollimationseinrichtungen (18) befindet.

6. Drehbare optische Verbindung nach Anspruch 3, bei der die Anzahl der ersten und der zweiten Kollimationseinrichtungen (18, 20) gleich drei bzw. vier ist.

7. Drehbare optische Verbindung nach einem der vorhergehenden Ansprüche, bei der jede der ersten und der zweiten Kollimationseinrichtungen (18, 20) im Wesentlichen den gleichen Querschnitt besitzt.

8. Drehbare optische Verbindung nach einem der vorhergehenden Ansprüche, bei der der Übertragungsweg sowohl in dem ersten als auch in dem zweiten Organ (10, 12) Sende- und Empfangs-Lichtleitfasern (32, 36, 38, 40, 44, 50, 52, 54) umfasst, die mit jeder der ersten und der zweiten Kollimationseinrichtungen (18, 20) über optische Kopplungsmittel (34, 42, 46, 48) verbunden sind, die die Trennung/Rekombination der Bündel ermöglichen.

9. Drehbare optische Verbindung nach einem der vorhergehenden Ansprüche, bei der die Lichtleitfasern (32, 36, 38, 40, 44, 50, 52, 54) Multimodenfasern sind.
